(19) Europäisches Patentamt
European Patent Office
Office européen des brevets

(11) Numéro de publication: 0 004 997
B1

(12) **FASCICULE DE BREVET EUROPEEN**

(45) Date de publication du fascicule de brevet: 13.05.81

(21) Numéro de dépôt: 79200192.7

(22) Date de dépôt: 17.04.79

(51) Int. Cl.$^3$: C 08 L 33/02, C 08 L 67/04, C 11 D 3/37

(54) **Particules à base de polylactones dérivées d'acides polyhydroxycarboxyliques et compositions pulvérulentes contenant ces particules.**

(30) Priorité: 24.04.78 FR 7812255

(43) Date de publication de la demande: 31.10.79 Bulletin 79/22

(45) Mention de la délivrance du brevet: 13.05.81 Bulletin 81/19

(84) Etats Contractants Désignés: BE CH DE FR GB IT LU NL SE

(56) Documents cités: Néant

(73) Titulaire: SOLVAY & Cie (Société Anonyme)
Rue du Prince Albert, 33
B-1050 Bruxelles (BE)

(72) Inventeur: Lorquet, Robert
Avenue du Touquet, 23
B-1330 Rixensart (BE)

(74) Mandataire: Eischen, Roland
Solvay & Cie Département de la Propriété
Industrielle Rue de Ransbeek 310
B-1120 Bruxelles (BE)

EP 0 004 997 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Particules à base de polylactones dérivées d'acides polyhydroxycarboxyliques et compositions pulvérulentes contenant ces particules

La présente invention concerne des particules à base de polylactones dérivées d'acides polyhydroxycarboxyliques se désagrégeant facilement en milieu aqueux ainsi que des compositions pulvérulentes contenant ces particules utilisables notamment pour le lavage, le nettoyage et le blanchiment.

Il est connu, par le brevet belge 830 603 déposé le 25 juin 1975 au nom de la Demanderesse, de mettre en oeuvre, dans des compositions pulvérulentes pour le lavage, le nettoyage, et le blanchiment, des particules de polylactones dérivées de polymères hydroxyacryliques. Ces polylactones sont des esters inter- et intramoléculaires d'homoet de copolymères d'acides $\alpha$-hydroxyacryliques, se présentant généralement sous forme de particules constituées exclusivement de polylactones, et sont généralement insolubles dans l'eau. Ces particules de polylactones sont mises en oeuvre conjointement avec des particules d'un composé basique. Dans les compositions pulvérulentes précitées, les polylactones associées à un composé basique remplacent avantageusement les polymères hydroxycarboxyliques qui, eux-mêmes, remplissent, avec une efficacité très nettement accrue, les fonctions exercées, dans les compositions conventionelles, par des polyphosphates alcalins.

Cependant, les particules de polylactones utilisées selon le procédé connu présentent un inconvénient sérieux. En effet, les compositions pulvérulentes précitées sont mises en oeuvre en milieu aqueux et les particules de polylactones se désagrègent lentement dans le milieu, ralentissent de ce fait considérablement le processus de lavage, de nettoyage ou de blanchiment.

La Demanderesse a maintenant trouvé des particules de polylactones de polymères hydroxycarboxyliques qui ne présentent plus cet inconvénient.

L'invention concerne donc des particules à base de polylactones dérivées d'acides polyhydroxycarboxyliques qui contiennent un bicarbonate dérivé d'un métal alcalin ou d'ammonium.

Tous les bicarbonates alcalins ou d'ammonium conviennent selon l'invention. Généralement, pour des raisons économiques, on utilise le bicarbonate d'ammonium et, plus particulièrement, le bicarbonate de sodium qui est le plus courant.

En général, on observe déjà un effet sur l'aptitude à la désagrégation en milieu aqueux des particules de polylactones pour des quantités de bicarbonates aussi faibles que 1% en poids par rapport aux polylactones. De même, des quantités de bicarbonates supérieures à 30% n'améliorent plus significativement l'aptitude à la désagrégation. De préférence, la teneur en bicarbonates des particules selon l'invention est comprise entre 3 et 20% en poids par rapport aux polylactones. Les meilleurs résultats sont obtenus entre 5 et 15% en poids.

Les polylactones dérivées d'acides polyhydroxycarboxyliques utilisées dans les particules selon l'invention peuvent être de natures très différentes. En général, on utilise des polylactones dérivées d'acides polyhydroxycarboxyliques dont la chaîne principale comporte des atomes de carbone substitués par des fonctions hydroxyles et des atomes de carbone substitués par des fonctions carboxyles. De préférence, les polylactones utilisées selon l'invention dérivent d'acides polyhydroxycarboxyliques comportant dans la chaîne principale des atomes de carbone substitués simultanément par une fonction hydroxyle et par une fonction carboxyle. Plus particulièrement, on préfère que la chaîne principale comporte des unités de formule

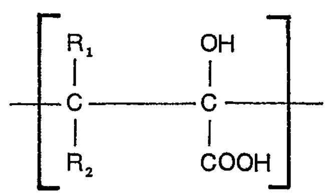

où $R_1$ et $R_2$ représentent l'hydrogène ou un groupement alkyle comprenant de 1 à 3 atomes de carbone; $R_1$ et $R_2$ pouvant être identiques ou différents. De préférence encore, $R_1$ et $R_2$ représentent un atome d'hydrogène ou un groupement méthyle, $R_1$ et $R_2$ pouvant être identiques ou différents. Les meilleurs résultats sont obtenus lorsque $R_1$ et $R_2$ représentent l'hydrogène.

Les polylactones utilisées selon l'invention sont des esters inter- et intra-moléculaires d'homo- ou de co-polymères d'acides $\alpha$-hydroxyacryliques. En général, dans ces polylactones environ 30 à 100% et en général 40 à 100% des fonctions acides des unités monomériques $\alpha$-hydroxyacryliques sont estérifiées par des fonctions alcohols.

Les acides polyhydroxycarboxyliques dont sont dérivées de préférence les polylactones sont choisis parmi les homo- ou co-polymères contenant des unités dont la formule est définie ci-dessus, du même type ou de plusieurs types différents. Lorsqu'on utilise des copolymères, on les choisit parmi ceux qui contiennent au moins 50% d'unités telles que définies ci-dessus et, de préférence parmi ceux qui contiennent au moins 65% de pareilles unités. Les meilleurs résultats sont obtenus avec les polymères qui ne contiennent que des unités telles que définies ci-dessus.

Parmi les copolymères dont les polylactones sont utilisables, figurent ceux qui contiennent des unités dérivées de monomères vinyliques substitués par des groupements choisis parmi les groupements hydroxyles et carboxyles. Avantageusement, ces copolymères contiennent des unités acryliques de formule

$$\left[ C(R_3)(R_4)—CH(COOH) \right]$$

où $R_3$ et $R_4$ représentent un atome d'hydrogène ou un groupement alkyle comprenant de 1 à 3 atomes de carbone. Parmi ces copolymères, on préfère utiliser ceux contenant des unités dérivées de l'acide acrylique non substitué où $R_3$ et $R_4$ représentent l'hydrogène.

Les polylactones dérivées de l'acide poly-$\alpha$-hydroxyacrylique non substitué conduisent au meilleur résultat.

La masse moléculaire moyenne des acides polyhydroxycarboxyliques dont sont dérivées les polylactones utilisées selon l'invention, déterminée au moyen de la relation de FLORY à partir de résultats combinés d'ultracentrifugation et de mesure de viscosité intrinsèque (L. Manderkern et P. J. Flory, J. Chem. Physics, 1952, *20,* p.212—214), est supérieure à environ 300 et est comprise avantageusement entre 2000 et 1 000 000 et de préférence entre 3 000 et 600 000.

Quel que soit leur degré de polymérisation et leur taux de lactonisation, les polylactones utilisées selon l'invention doivent être solides à la température ordinaire.

En plus des polylactones et des bicarbonates, les particules selon l'invention peuvent contenir de faibles quantités, de préférence moins de 20% en poids par rapport au poids total, d'autres constituants tels que des azurants optiques et des colorants.

Les particules selon l'invention ont une structure hétérogène étant donné qu'elles comprennent au moins deux phases solides à base l'une de polylactones et l'autre, finement dispersée dans la première, de bicarbonates. Avantageusement, elles sont fabriquées par mélange à sec de particules élémentaires extrêmement ténues de polylactones et de bicarbonates. En général, ces particules élémentaires ont un diamètre moyen compris entre 1 et 200 microns. Il est de préférence compris entre 2 et 50 microns. Le mélange à sec peut être réalisé dans n'importe quel mélangeur connu et est suivi par un compactage destiné à agglomérer les particules élémentaires entre elles pour former les particules selon l'invention. A cet effet, on peut utiliser n'importe quel compacteur connu capable d'exercer une pression suffisante. De préférence, la pression exercée au cours du compactage est supérieure à 50 kg/cm². Des appareils convenant bien sont les pastilleuses et les compacteurs à cylindres. Après le compactage, on peut encore procéder à un broyage pour amener les particules aux dimensions désirées pour leur mise en oeuvre.

Lorsque les particules selon l'invention sont destinées à être mises en oeuvre dans des compositions pulvérulentes, on préfère que les particules soient sensiblement sphériques et de diamètre semblable à celui des autres constituants particulaires des compositions pulvérulentes. Dans ce cas, on préfère que le diamètre moyen des particules soit compris entre 0,025 et 5 mm, et plus particulièrement entre 0,05 et 1,5 mm. Cependant, les particules selon l'invention peuvent, pour d'autres applications notamment, avoir des dimensions plus importantes, de l'ordre du centimètre par exemple, et des formes quelconques telles que celles de pastilles, de tablettes et de comprimés.

Afin de ne pas favoriser une réaction prématurée entre les polylactones et les bicarbonates au sein des particules selon l'invention, on préfère que ces particules aient une faible teneur en eau: de préférence moins de 20% en poids, et plus particulièrement moins de 10%. A cet effet, les particules selon l'invention sont fabriquées de préférence à sec à partir de particules élémentaires de polylactones et de bicarbonates ayant également une faible teneur en eau.

Le phénomène à l'origine de l'amélioration de l'aptitude à la désagrégation des particules selon l'invention n'est pas connu. On a cependant observé qu'il y a formation d'un produit gazeux lors de la mise en contact des particules avec l'eau. Ceci permet de supposer qu'une réaction, accompagnée de la formation d'un produit gazeux, se produit et fait probablement éclater les particules.

Un autre aspect de l'invention concerne les compositions pulvérulentes contenant des particules telles que définies ci-avant utilisables pour le lavage, le nettoyage, et le blanchiment, notamment.

Dans ces compositions, les particules utilisées ont sensiblement la même dimension et la même densité apparente que les autres constituants en poudre présents. De préférence, la densité apparente est comprise entre 0,2 et 0,8 g/cm³ et plus particulièrement entre 0,4 et 0,65 g/cm³.

Les compositions pulvérulentes selon l'invention contiennent d'habitude, outre les particules à base de polylactones d'autres constituants, se trouvant de préférence sous forme pulvérulente, et plus particulièrement des composés basiques et des composés peroxydés. Les composés basiques sont choisis avantageusement parmi les silicates, phosphates, carbonates, borates ou hydroxydes d'ammonium ou de métaux alcalins tels que le sodium ou le potassium. On peut également utiliser des composés basiques peroxydés tels que les perborates, percarbonates, perphosphates ou peroxydes d'ammonium ou de métaux alcalins tels que le sodium ou le potassium.

Les autres constituants sont choisis en fonction du domaine spécial d'application de la composition. Ce peuvent être des composés peroxydés autres que ceux cités ci-dessus, des agents tensioactifs cationiques, anioniques, non ioniques, amphotères ou ampholytiques, des activateurs des persels, des azurants optiques, des inhibiteurs de mousse, des enzymes, des inhibiteurs de ternissement, des agents d'antiredéposition des salissures, des désinfectants, des inhibiteurs de corrosion, des parfums, des colorants, des agents servant à régler le pH, des agents capables de libérer du chlore actif, etc. De plus, ces compositions peuvent également contenir des composés ayant la même fonction principale que les polylactones tels que notamment le tripolyphosphate de sodium, ou le nitrilotriacétate de sodium.

Une composition typique de celles selon l'invention contient en poids:

— de 0,1 à 80% de particules à base de polylactones
— de 10 à 95% d'un ou de plusieurs composés peroxydés
— de 0 à 60% d'un ou de plusieurs activateurs des composés peroxydés
— de 0 à 50% d'un composé basique dont la présence est indispensable si le composé peroxydé ne possède pas de caractère basique.

De telles compositions sont utilisées à raison de 0,5 à 20 g par litre d'eau et les températures d'utilisation varient entre 20 et 130°C, le temps de traitement pouvant varier entre 1 et 200 minutes. Elles peuvent être utilisées notamment comme poudres à laver à usage domestique.

Les exemples qui suivent servent à illustrer l'invention.

Exemple 1 (comparatif)

Une poudre d'une polylactone dérivée de l'acide poly-$\alpha$-hydroxyacrylique, contenant 92% de polylactone et 8% en poids d'eau et dont le diamètre moyen des particules est situé entre 5 et 10 $\mu$, est transformée en pastilles d'environ 20 mm de diamètre et 15 m.n de hauteur au moyen d'une presse hydraulique en appliquant une pression de 1 tonne par $cm^2$.

Les pastilles sont ensuite broyées sur un broyeur à marteau BAUERMEISTER de type UTL tournant à 4 800 tours par minute équipé d'un rotor ayant un diamètre de 125 mm et une grille perforée de 2 mm. La poudre traversant la grille est ensuite tamisée et classée. Les fines sont recyclées à l'étape de compactage et les grosses sont à nouveau broyées.

Les particules retenues ont un diamètre compris entre 0,250 et 1 mm. On examine leur friabilité, leur poids spécifique apparent par écoulement libre et le nombre de particules non désagrégées par g de produit mis en solution (test de délitage).

La friabilité des particules peut être mesurée en soumettant une fraction granulométrique déterminée (0,425 à 0,850 mm) à un transport pneumatique dans une tuyauterie enroulée en spirale. La quantité de fines de diamètre inférieur à 0,425 mm, observé après le test, est une mesure de la friabilité des particules.

Le poids spécifique apparent par écoulement libre (PSE) est déterminé par un procédé analogue à celui décrit aux A.S.T.M. Standards D 392—38 et B 212—48, préconisés respectivement pour la mesure du poids spécifique apparent des poudres à mouler et des poudres métalliques. L'appareillage utilisé est cependant légèrement différent. Il comporte une trémie tronconique dont la grande base a un diamètre de 53 mm et la petite base, munie d'un obturateur à ouverture totale, a un diamètre de 21 mm, la hauteur entre les bases étant de 58 mm et le volume utile d'environ 60 $cm^3$.

Le godet cylindrique d'un volume de 50 $cm^3$ a un diamètre intérieur de 37 mm et une hauteur égale à environ 46 mm. La base de la trémie est placée à 65 mm au-dessus du fond du godet. Le mode opératoire est identique à celui décrit aux standards ASTM. On ferme l'obturateur de la trémie et on remplit celle-ci avec le produit à examiner et on arase au niveau du bord supérieur de la trémie à l'aide d'une lame rectiligne. On dispose le godet dans l'axe de la trémie et on ouvre l'obturateur. Aprés écoulement de la matière, on arase au niveau supérieur du godet. Le poids spécifique apparent par écoulement libre est égal au rapport entre le poids de matière dans le godet exprimé en kg et le volume du godet exprimé en $dm^3$.

Pour mesurer l'aptitude au délitage on réalise le test suivant: on prend environ 1 g (ici : 1,05 g) de particules et on les mélange à une quantité sensiblement équivalente (ici : 0,8 g) de carbonate de sodium et à 8,37 g d'une composition de base de poudre à lessiver et on introduit ce mélange dans un litre d'eau. On agite le mélange liquide pendant 3 minutes au moyen d'un agitateur mécanique, et la suspension résiduaire est passée au travers d'un tamis de 425 $\mu$. On compte la nombre de grains présents sur le tamis sous lumière U.V. L'aptitude au délitage est inversément lié au nombre de grains non désagrégés de dimensions supérieures à 0,425 mm par g de particules mises en oeuvre.

Les résultats obtenus sont rassemblés au tableau I ci-après.

Exemple 2

Les opérations identiques à celles de l'exemple 1 sont reprises mais en incorporant à la poudre de polylactone du $NaHCO_3$ fin à raison de 10% en poids par rapport à la polylactone sèche.

Le test de délitage est effectué sur un échantillon contenant 1,16 g de particules mélangé à 0,73 g de $Na_2CO_3$ et 8,37 g d'une composition de base de poudre à lessiver.

Les résultats obtenus sont rassemblés au tableau I.

Exemple 3 (comparatif)

L'exemple 2 est répété mais en substituant 10% en poids de $Na_2SO_4$ fin au bicarbonate.

Le test de délitage a été effectué sur un échantillon contenant 1,16 g de particules mélangé à 0,8 g de $Na_2CO_3$ et 8,37 g d'une composition de base de poudre à lessiver.

Exemple 4 (comparatif)

L'exemple 2 est répété en substituant 10 % de carbonate de sodium au bicarbonate.

Le test de délitage a été effectué sur un échantillon contenant 1,16 g de particules, mélangé à 0,70 g de $Na_2CO_3$ et 8,37 g d'une composition de base de poudre à lessiver.

Les résultats figurent dans le tableau I.

TABLEAU I

| | Essai 1 | Essai 2 | Essai 3 | Essai 4 |
|---|---|---|---|---|
| Composition, % du poids sec | | | | |
| – polylactone (à 100 %) | 100 | 90,9 | 90,9 | 90,9 |
| – $NaHCO_3$ | – | 9,1 | – | – |
| – $Na_2CO_3$ | – | – | – | 9,1 |
| – $Na_2SO_4$ | – | – | 9.1 | – |
| Propriétés physiques | | | | |
| – répartition granulométrique, % | | | | |
| 0,250 – 0,425 mm | 19,95 | 21,7 | 21,2 | 24,4 |
| 0,425 – 0,850 mm | 61,34 | 59,1 | 59,1 | 60,2 |
| 0,850 – 1,000 mm | 18,71 | 19,2 | 19,7 | 15,4 |
| – friabilité, % sur fraction classée 0,425 – 0,850 mm | 19,2 | 15,4 | 17,3 | 19,2 |
| – Poids spécifique apparent, kg/$dm^3$ | 0,53 | 0,57 | 0,58 | 0,57 |
| – aptitude au délitage, nombre de grains /g | | | | |
| sur échantillon total | 63 | 14 | 54 | 37 |
| sur fraction classée 0,425 – 0,850 mm | 80 | 16 | 63 | 37 |
| 0,850 – 1,000 mm | 60 | 11 | 75 | 23 |

On peut déduire de ces résultats moyens que l'addition de sels tels que $Na_2SO_4$ ou $Na_2CO_3$ à la polylactone ne modifie pas ou très peu l'aptitude au délitage. Par contre l'addition de bicarbonate permet de réduire sensiblement le nombre de grains résiduaires.

Exemple 5 (comparatif)

On travaille dans les conditions et avec les produits de l'exemple 1 mais les pastilles sont comprimées avec une presse hydraulique opérant à une pression de 0,6 tonne/$cm^2$.

Le test de délitage a été effectué sur un échantillon de 1,05 g de polylactone mélangé à 0,80 g de $Na_2CO_3$ et 8,37 g d'une composition de base de poudre à lessiver.

Les caractéristiques des particules obtenues sont reprises au Tableau II.

Exemple 6

On travaille dans les mêmes conditions qu'à l'exemple 5 mais en incorporant 5% en poids de $NaHCO_3$, par rapport à la polylactone sèche, à la poudre de départ.

Le test de délitage a été effectué sur un échantillon de 1,10 g de polylactone mélangé à 0,77 g de $Na_2CO_3$ et 8,37 g d'une composition de base de poudre à lessiver.

Les résultats sont repris au tableau II.

Exemples 7 et 8

L'exemple 6 est répété en travaillant respectivement avec 10 et 15% en poids de $NaHCO_3$.

Les tests de délitage ont été effectués sur des échantillons de 1,16 et 1,21 g de polylactone mélangés à 0,73 et 0,70 g de $Na_2CO_3$, respectivement, et 8,37 g d'une composition de base d'une poudre à lessiver.

Les résultats sont repris au tableau II.

TABLEAU II

| | Essai 5 | Essai 6 | Essai 7 | Essai 8 |
|---|---|---|---|---|
| Composition, % du poids sec | | | | |
| – polylactone (à 100 %) | 100 | 95,2 | 90,9 | 87 |
| – $NaHCO_3$ | – | 4,8 | 9,1 | 13 |
| Propriétés physiques | | | | |
| – repartition granulométrique, % | | | | |
| 0,250 – 0,425 mm | 26,0 | 29,5 | 26,5 | 29,7 |
| 0,425 – 0,850 mm | 65,7 | 61,8 | 63,6 | 61,2 |
| 0,850 – 1,000 mm | 8,3 | 8,7 | 10,0 | 9,1 |
| – Poids spécifique apparent, kg/$dm^3$ | 0,45 | 0,45 | 0,46 | 0,47 |
| – aptitude au délitage, nombre de grains/g | | | | |
| sur échantillon total | 5 | 3 | 1 | 1 |
| sur fraction classée | | | | |
| 0,425 – 0,850 mm | 28 | 0 | 1 | 0 |
| 0,850 – 1,000 mm | 1 | 1 | 0 | 0 |

On peut déduire de ces résultats que l'addition de 5% de bicarbonate, à la polylactone, suivi d'un compactage à pression moyenne, suffit pour réaliser des granules présentant une désintégration en milieu aqueux excellent. L'addition de quantités de l'ordre de 15% permet d'obtenir un délitage devenu quasi quantitatif.

**Revendications**

1. Particules à base de polylactones dérivées d'acides polyhydroxycarboxyliques caractérisées en ce qu'elles contiennent un bicarbonate dérivé d'un métal alcalin ou d'ammonium.

2. Particules selon la revendication 1, caractérisées en ce que le bicarbonate est le bicarbonate de sodium.

3. Particules selon la revendication 1 ou 2, caractérisées en ce qu'elles contiennent entre 3 et 20% en poids de bicarbonates par rapport aux polylactones.

4. Particules selon l'une quelconque des revendications 1 à 3, caractérisées en ce qu'elles sont fabriquées par mélange à sec de particules élémentaires de polylactones et de bicarbonate de diamètre moyen compris entre 2 et 50 microns.

5. Particules selon l'une quelconque des revendications 1 à 4, caractérisées en ce qu'elles ont un diamètre moyen compris entre 0,05 et 1,5 mm.

6. Particules selon l'une quelconque des revendications 1 à 5, caractérisées en ce qu'elles contiennent moins de 10% en poids d'eau.

7. Particules selon l'une quelconque des revendications 1 à 6, caractérisées en ce que les polylactones sont dérivées d'acides polyhydroxycarboxyliques dont la chaîne principale comporte des unités de formule

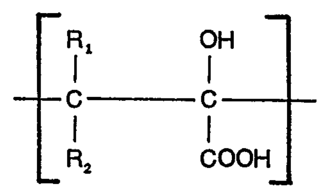

où $R_1$ et $R_2$ représentent l'hydrogène ou un groupement alkyle comprenant de 1 à 3 atomes de carbone.

8. Particules selon la revendication 7, caractérisées en ce que les acides polyhydroxycarboxyliques dont les polylactones sont dérivées ne comprennent que des unités de formule

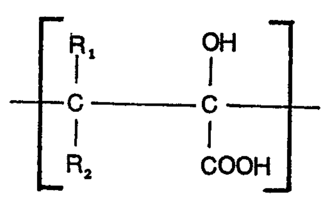

9. Particules selon la revendication 8, caractérisées en ce que les polylactones sont

dérivées de l'acide poly-$\alpha$-hydroxyacrylique non substitué.

10. Compositions pulvérulentes pour le lavage, le nettoyage, et le blanchiment, caractérisées en ce qu'elles contiennent des particules selon l'une quelconque des revendications 1 à 9.

**Claims**

1. Particles based on polylactones derived from polyhydroxycarboxylic acids, characterised in that they contain a bicarbonate derived from an alkali metal or from ammonium.

2. Particles according to Claim 1, characterised in that the bicarbonate is sodium bicarbonate.

3. Particles according to Claim 1 or 2, characterised in that they contain between 3 and 20% by weight of bicarbonates, relative to the polylactones.

4. Particles according to any one of Claims 1 to 3, characterised in that they are manufactured by the dry mixing of elementary particles of polylactones and bicarbonate, having an average diameter of between 2 and 50 microns.

5. Particles according to any one of Claims 1 to 4, characterised in that they have an average diameter of between 0.05 and 1.5 mm.

6. Particles according to any one of Claims 1 to 5, characterised in that they contain less than 10% by weight of water.

7. Particles according to any one of Claims 1 to 6, characterised in that the polylactones are derived from polyhydroxycarboxylic acids in which the main chain contains units of the formula:

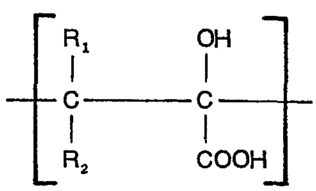

in which $R_1$ and $R_2$ represent hydrogen or an alkyl group containing from 1 to 3 carbon atoms.

8. Particles according to Claim 7, characterised in that the polyhydroxycarboxylic acids from which the polylactones are derived only comprise units of the formula:

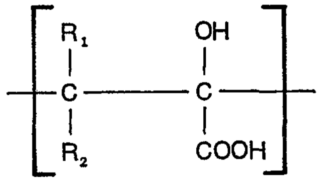

9. Particles according to Claim 8, characterised in that the polylactones are derived from unsubstituted poly-$\alpha$-hydroxyacrylic acid.

10. Pulverulent compositions for washing, cleaning and bleaching, characterised in that they contain particles according to any one of Claims 1 to 9.

**Patentansprüche**

1. Teilchen auf der Basis von Polylactonderivaten von Polyhydroxycarbonsäuren, dadurch gekennzeichnet, daß sie ein Bicarbonatderivat eines Alkalimetalls oder von Ammonium enthalten.

2. Teilchen gemäß Anspruch 1, dadurch gekennzeichnet, daß das Bicarbonat Natriumbicarbonat ist.

3. Teilchen gemäß Anspruch 1 oder 2, dadurch gekennzeichnet, daß sie 3—20 Gew.-% Bicarbonate bezogen auf die Polylactone enthalten.

4. Teilchen gemäß einem der Ansprüche 1 bis 3, dadurch gekennzeichnet, daß sie hergestellt sind durch trockene Vermischung von Grundteilchem von Polylactonen und Bicarbonat mit einem mittleren Durchmesser von 2—50 Mikron.

5. Teilchen gemäß einem der Anspruche 1—4, dadurch gekennzeichnet, daß sie einen mittleren Durchmesser von 0,05—1,5 mm besitzen.

6. Teilchen gemäß einem der Ansprüche 1—5, dadurch gekennzeichnet, daß sie weniger als 10 Gew.-% Wasser enthalten.

7. Teilchen gemäß einem der Ansprüche 1—6, dadurch gekennzeichnet, daß die Polylactone Derivate von Polyhydroxycarbonsäuren sind, deren Hauptkette Einheiten der Formel

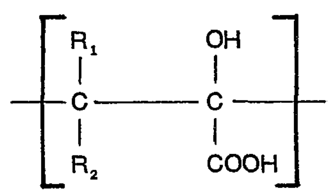

tragen, in der $R_1$ und $R_2$ Wasserstoff oder eine Alkylgruppe mit 1—3 Kohlenstoffatomen darstellen.

8. Teilchen gemäß Anspruch 7, dadurch gekennzeichnet, daß die Polyhydroxycarbonsäuren, von denen die Polylactone abgeleitet sind, nur Einheiten der Formel

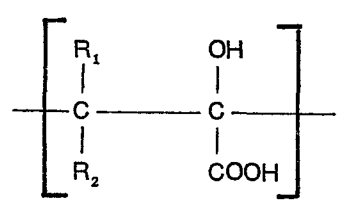

aufweisen.

9. Teilchen gemäß Anspruch 8, dadurch gekennzeichnet, daß die Polylactone abgeleitet sind von nicht-substituierter Poly-$\alpha$-hydroxy-acrylsäure.

10. Pulverförmige Zusammensetzungen für die Wäsche, Reinigung und Bleichung, dadurch gekennzeichnet, daß sie Teilchen gemäß einem der Anspruche 1—9 enthalten.